# EUROPEAN PATENT APPLICATION

(11) **EP 2 852 183 A1**
(43) Date of publication of application: **25.03.2015**
(21) Application number: 14160927.1
(22) Date of filing: 20.03.2014
(51) Int. Cl.: H04W 4/00, G06F 3/16, G10L 15/08

(54) **Apparatus and method for generating an event by voice recognition**

(30) Priority: 24.09.2013 KR 20130113546
(71) Applicant: Diotek Co., Ltd., Geumcheon-gu, Seoul (KR)
(72) Inventor: Shin, Jongwon, 423-746 Gyeonggi-do (KR); Kim, Semi, 151-015 Seoul (KR); Jung, Kanglae, 151-890 Seoul (KR); Doh, Jeongin, 137-930 Seoul (KR); Youn, Jehseon, 443-270 Gyeonggi-do (KR); Kim, Kyeongsun, 448-785 Gyeonggi-do (KR)
(74) Representative: Kazi, Ilya

(57) **Abstract**

In some examples, there are provided an apparatus and a method for generating an event through voice recognition. The apparatus for generating an event through voice recognition according to the present invention may include one or more processing devices, in which the one or more processing devices may be configured to obtain input information on the basis of a voice of a user, to match the input information to at least one identification information obtained based on application screen information, to obtain matched identification information matched to the input information among the identification information, and to generate an event in at least a partial area of areas corresponding to the matched identification information. There is an advantage in that since an electronic device can be controlled through voice recognition even when using an application that does not store a control command in advance, accessibility of a user to the electronic device can be improved.

## Description

### CROSS-REFERENCE TO RELATED APPLICATIONS

This application claims the priority of Korean Patent Application No. 2013-0113546 filed on September 24, 2013, in the Korean Intellectual Property Office, the disclosure of which is incorporated herein by reference.

### BACKGROUND OF THE INVENTION

### Field of the Invention

The present invention relates to an apparatus and a method for generating an event through voice recognition, and more particularly, to an apparatus and a method for generating an event through voice recognition by using identification information obtained based on application screen information.

### Description of the Related Art

As the number of users that use electronic devices such as a computer, a notebook PC, a smart phone, a tablet PC and navigation increases, the importance of a user interface that enables interaction between the electronic device and the user has grown.

In many cases, a typical user interface depends on a physical input through an input device such as a keyboard, a mouse, or a touch screen. However, it is not easy for visually handicapped people who cannot see a displayed screen or people who have trouble manipulating the input device such as the touch screen to manipulate the electronic device by using the aforementioned user interface.

When even people without a disability are in a tough situation where it is difficult for the people without a disability to manipulate the electronic device such as driving a car or carrying packages in both hands, it is not easy for the people without a disability to manipulate the electronic device by using the aforementioned user interface.

Therefore, there is a demand for development of a user interface capable of improving accessibility to the electronic device. As an example of the user interface capable of improving accessibility to the electronic device, there is a voice recognition technique that controls the electronic device by analyzing a voice of a user.

In order to control the electronic device through the voice of the user by using the voice recognition technique, a control command to be matched to the voice of the user needs to be previously stored in the electronic device.

When the control command to be matched to the voice of the user is stored in a platform, a basic setting of the electronic device, for example, a basic control of the electronic device such as the volume control or the brightness control of the electronic device can be performed through voice recognition.

In contrast, in order to control each individual application through the voice recognition, the control command to be matched to the voice of the user needs to be stored in each individual application.

Accordingly, in order to enable the voice recognition in an application that does not support the voice recognition or to further add a voice recognition function, it is required to develop or update the application needs so as to allow the control command to be matched to the voice of the user to be stored in the application.

However, since kinds of applications embedded in the electronic device are diversified from day to day, it is not easy to store the control command to be matched to the voice of the user all kinds of applications. Thus, there is a problem in that it is difficult to implement a general purpose voice recognition system to be interworked in various applications.

For this reason, the number of applications that support the voice recognition is small and even the application that supports the voice recognition has a limitation on operations to be performed through the voice recognition. Thus, there is substantially a limitation on improving the accessibility to the electronic device.

Accordingly, there is a demand for development of a technique capable of improving the accessibility to the electronic device through the voice recognition.

### SUMMARY OF THE INVENTION

In an aspect, the present invention may provide an apparatus and a method capable of controlling an electronic device through voice recognition even when a user uses an application that does not store a control command in advance.

In another aspect, the present invention may also provide an apparatus and a method capable of providing an intuitive voice recognition system by using application screen information.

Aspects of the present invention are not limited to the above described objects, other aspects and/or objects not described above will be understood by a person who skilled in the art from the following description.

In order to obtain the above described aspect, the apparatus for generating an event through voice recognition according to an exemplary embodiment of the present invention may include one or more processing devices, in which the one or more processing devices may be configured to obtain input information on the basis of a voice of a user, to match the input information to at least one identification information obtained based on application screen information, to obtain matched identification information matched to the input information among the identification information, and to generate an event in at least a partial area of areas corresponding to the matched identification information.

According to another optional characteristic of the present invention, the identification information may be obtained through optical character recognition (OCR).

According to still another optional characteristic of the present invention, the input information may include voice pattern information obtained by analyzing a feature of the voice of the user, and the matching of the input information to the identification information may include matching of the identification information to the voice pattern information.

According to still another optional characteristic of the present invention, the input information may include text information recognized from the voice of the user through voice recognition, and the matching of the input information to the identification information may include matching of the identification information to the text information.

According to still another optional characteristic of the present invention, the one or more processing devices may obtain additional input information on the basis of the voice of the user and may determine the type of the event on the basis of the additional input information.

In order to obtain the above described aspect, the apparatus for generating an event through voice recognition according to an exemplary embodiment of the present invention may include one or more processing devices, in which the one or more processing devices may be configured to obtain input information on the basis of a voice of a user, to match the input information to at least one identification information obtained based on application information, to obtain matched identification information matched to the input information among the identification information, to create a control object so as to correspond to the matched identification information, and to generate an event for the control object.

In order to obtain the above described aspect, the method for generating an event through voice recognition according to an exemplary embodiment of the present invention may include obtaining input information on the basis of a voice of a user; matching the input information to at least one identification information obtained based on application screen information; obtaining matched identification information matched to the input information among the identification information; and generating an event in at least a partial area of areas corresponding to the matched identification information.

According to another optional characteristic of the present invention, the identification information may be obtained through optical character recognition (OCR).

According to still another optional characteristic of the present invention, the input information may include voice pattern information obtained by analyzing a feature of the voice of the user, and the matching of the input information to the identification information may include matching of the identification information to the voice pattern information.

According to still another optional characteristic of the present invention, the input information may include text information recognized from the voice of the user through voice recognition, and the matching of the input information to the identification information may include matching of the identification information to the text information.

According to still another optional characteristic of the present invention, the method may further include obtaining additional input information on the basis of the voice of the user; and determining the type of the event on the basis of the additional input information.

In order to obtain the above described aspect, the method for generating an event through voice recognition according to an exemplary embodiment of the present invention may include obtaining input information on the basis of a voice of a user; matching the input information to at least one identification information obtained based on application screen information; creating a control object on the basis of the identification information; obtaining matched identification information matched to the input information among the identification information; creating a control object so as to correspond to the matched identification information; and generating an event for the control object.

In order to obtain the above described aspect, the computer-readable medium that stores command sets according to an exemplary embodiment of the present invention is provided, in which when the command sets are executed by a computing apparatus, the command sets may cause the computing apparatus to obtain input information on the basis of a voice of a user, to match the input information to at least one identification information obtained based on application screen information, to obtain matched identification information matched to the input information among the identification information, and to generate an event in at least a partial area of areas corresponding to the matched identification information.

Other detailed contents of embodiments are included in the specification and drawings.

As set forth above, according to exemplary embodiments of the invention, there is an advantage in that since an electronic device can be controlled through voice recognition even when using an application that does not store a control command in advance, accessibility of a user to the electronic device can be improved.

According to exemplary embodiments of the invention, there is an advantage in that accessibility of a user can be improved through voice recognition by providing an intuitive voice recognition system by using application screen information.

Effects according to the present invention are not limited to the above contents, and more various effects are included in the present specification.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 illustrates a block diagram of an apparatus for generating an event according to an exemplary embodiment of the present invention;
FIG. 2 illustrates a flowchart of a method for generating an event according to an exemplary embodiment of the present invention;
FIG. 3 illustrates identification information obtained based on application screen information according to an exemplary embodiment of the present invention;
FIG. 4 illustrates identification information obtained based on application screen information according to an exemplary embodiment of the present invention;
FIG. 5 illustrates a control object generated so as to correspond to the obtained identification information according to an exemplary embodiment of the present invention.
FIG. 6 illustrates a schematic diagram of the apparatus for generating an event according to the exemplary embodiment of the present invention; and
FIG. 7 illustrates a schematic diagram of the apparatus for generating an event according to the exemplary embodiment of the present invention.

### DETAILED DESCRIPTION OF THE PREFERRED EMBODIMENT

Various advantages and features of the present invention and methods accomplishing thereof will become apparent from the following description of embodiments with reference to the accompanying drawings. However, the present invention is not limited to exemplary embodiment disclosed herein but will be implemented in various forms. The exemplary embodiments are provided by way of example only so that a person of ordinary skilled in the art can fully understand the disclosures of the present invention and the scope of the present invention. Therefore, the present invention will be defined only by the scope of the appended claims.

Although first, second, and the like are used in order to describe various components, the components are not limited by the terms. The above terms are used only to discriminate one component from the other component. Therefore, a first component mentioned below may be a second component within the technical spirit of the present invention.

The same reference numerals indicate the same elements throughout the specification.

Respective features of various exemplary embodiments of the present invention can be partially or totally joined or combined with each other and as sufficiently appreciated by those skilled in the art, various interworking or driving can be technologically achieved and the respective exemplary embodiments may be executed independently from each other or together executed through an association relationship.

When any one element for the present specification 'transmits' data or signal to other elements, it means that the element may directly transmit the data or signal to other elements or may transmit the data or signal to other elements through another element.

Terms used for describing the present invention will be defined.

Voice recognition basically means that an electronic device analyzes a voice of a user and recognizes the analyzed content as text. Specifically, when a waveform of the voice of the user is input to the electronic device, voice pattern information can be obtained by analyzing a voice waveform by referring to an acoustic model. Further, text having the highest matching probability in identification information can be recognized by comparing the obtained voice pattern information with the identification information.

The event means an occurrence or an action detected from the program, and examples of the event may include an output event for processing an output, an input event for processing an input, and a selection event for selecting a certain object.

Here, the output event is generated to display an image through a display apparatus, and is generated based on information about a target to be displayed, a displaying time, and a displaying position.

Meanwhile, The input event may be generated when an input such as a click, a touch or a key stroke is applied through an input device such as a mouse, a touchpad, a touch screen or a keyboard, or may be generated by processing an input as being virtually applied even though an actual input is not applied through the aforementioned input device.

Further, the type of the input event may have different depending on the input devices. For example, when the mouse is used, the input event may include a left click event, a right click event, a double click event, and a scroll wheel event. When a touch input device such as the touchpad or the touch screen is used, the input event may include a tap event, a long tap event, and a double tap event.

The input event may be generated based on information about the input device, an input pattern, an input position, an input maintaining time.

Meanwhile, the selection event is generated to select a control object, and when the selection event using a control object as a target is generated, the control object is selected. Alternatively, when the aforementioned input event is generated for the control object, the control object may be selected.

The event is not limited to the aforementioned input event, selection event and output event, and may include various events detected from the program.

Input information in the present specification means information obtained through a part of the voice recognition or the whole voice recognition on the basis of the voice of the user. For example, the input information may be voice pattern information obtained by analyzing a feature of a voice waveform of the user. Such voice pattern information may include voice feature coefficients extracted from the voice of the user for each short-time so as to express acoustic features.

The application screen information in the present specification means information used to display a certain screen in an application being run in the apparatus for generating an event.

The identification information in the present specification means text that is automatically obtained based on the application screen information through the apparatus for generating an event. When the voice pattern information obtained by analyzing the voice of the user is matched to the identification information of the text, the identification information having the highest matching probability among the identification information can be recognized.

When the identification information having the highest matching probability among the identification information is recognized, the event is generated in an area corresponding to the recognized identification information. Accordingly, even though the control command to be matched to the voice of the user is not stored, the event can be generated by the apparatus for generating an event.

A control object in the present specification means an interface such as a button that is displayed on the apparatus for generating an event to receive an input of the user, and when the input of the user is applied to the control object, a control operation that is previously determined is performed.

The control object may include an interface, such as a button, a check box and a text input field, that can be selected by the user through a click or a tap, but is not limited thereto. Even though the control object is not graphically represented or is transparently displayed, the control object may be all interfaces that can be selected by the user through an input device such as a mouse or a touch screen.

Hereinafter, various embodiments will be described in detail with reference to the accompanying drawings.

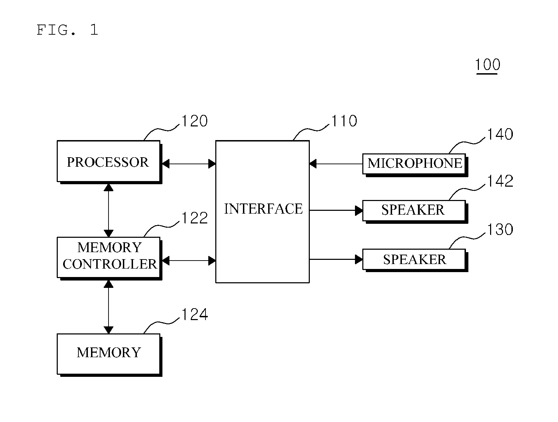

FIG. 1 illustrates a block diagram of an apparatus for generating an event according to an exemplary embodiment of the present invention.

Referring to FIG. 1, an apparatus for generating an event (hereinafter, also referred to as an "event generating apparatus") 100 according to the exemplary embodiment of the present invention may include a processor 120, a memory controller 122, and a memory 124, and may further include an interface 110, a microphone 140, a speaker 142, and a display 130.

The event generating apparatus 100 according to the exemplary embodiment of the present invention is a computing apparatus capable of generating an event through voice recognition, and includes one or more processing devices. The control object selecting apparatus may be devices such as a computer having an audio input function, a notebook PC, a smart phone, a tablet PC, navigation, PDA (Personal Digital Assistant), a PMP (Portable Media Player), a MP3 player, and an electronic dictionary, or may be a server capable of being connected to such devices or a distributed computing system including a plurality of computers. Here, the one or processing devices may include at least one or more processors 120 and the memory 124, and the plurality of processors 120 may share the memory 124.

The memory 124 stores a program or a command set, and the memory 124 may include a RAM (Random Access Memory), a ROM (Read-Only Memory), a magnetic disk device, an optical disk device, and a flash memory.

The processing devices are configured to obtain input information on the basis of a voice of a user, to match the input information to at least one identification information obtained based on application screen information, to obtain matched identification information matched to the input information among the identification information, and to generate an event in at least a partial area among areas corresponding to the matched identification information.

The memory controller 122 controls the access of units such as the processor 120 and the interface 110 to the memory 124.

The processor 120 performs operations for executing the program or the command set stored in the memory 124.

The interface 110 connects an input device such as the microphone 140 or the speaker 142 of the event generating apparatus 100 to the processor 120 and the memory 124.

The microphone 140 receives a voice signal, converts the received voice signal into an electric signal, and provides the converted electric signal to the interface 110. The speaker 142 converts the electric signal provided from the interface 110 into a voice signal and outputs the converted voice signal.

The display 130 displays visual graphic information to a user, and the display 130 may include a touch screen display that detects a touch input.

The event generating apparatus 100 according to the exemplary embodiment of the present invention generates an event through voice recognition by using the program (hereinafter, referred to as an "event generating engine") that is stored in the memory 124 and is executed by the processor 120.

The event generating engine is executed in a platform or a background of the event generating apparatus 100 to cause the event generating apparatus 100 to generate an event through the voice recognition by using screen information of an application run on the event generating apparatus 100.

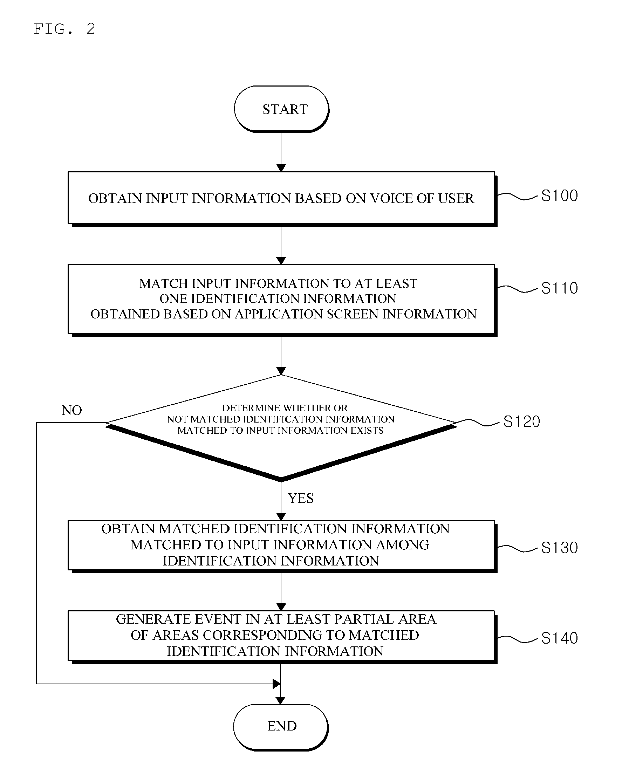

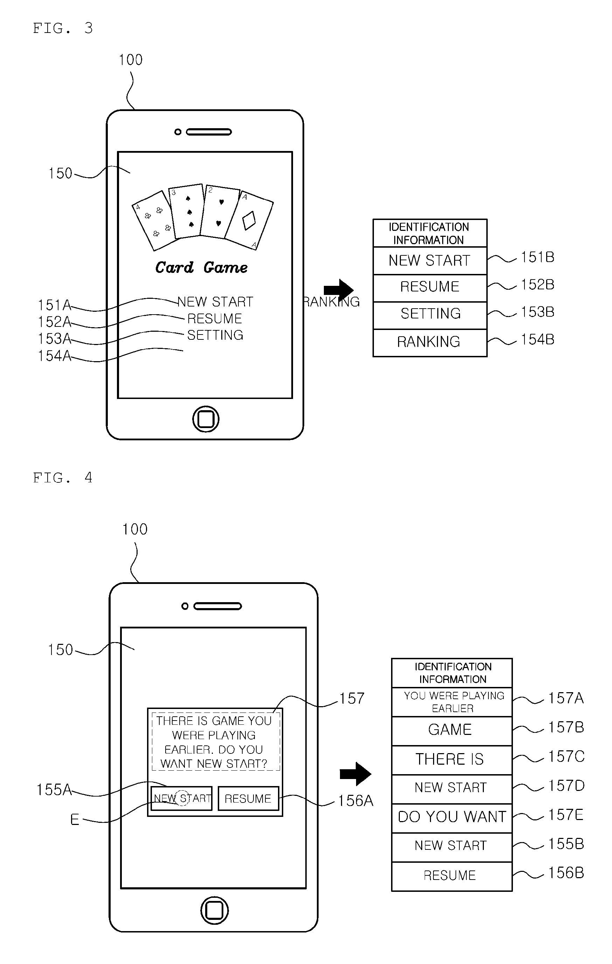

FIG. 2 is a flowchart of a method for generating an event according to an exemplary embodiment of the present invention. For the sake of convenience in description, the description will be made with reference to FIG. 3.

FIG. 3 illustrates identification information obtained based on application screen information according to an exemplary embodiment of the present invention.

As illustrated in FIG. 3, a card game application 150 may be run on the event generating apparatus 100, for example.

First, the event generating apparatus obtains input information on the basis of the voice of the user (S100).

Here, it has been described that the input information is voice pattern information obtained by analyzing a feature of the voice of the user, but is not limited thereto. The input information may correspond to all information that can be obtained through a part of the voice recognition or the whole voice recognition.

When the input information is obtained, the event generating apparatus matches the input information to at least one identification information obtained based on application screen information (S110).

When optical character recognition (OCR) is performed on the application screen information, identification information that are recognized as text on a screen displayed by the application screen information can be obtained. Here, the obtaining of the identification based on the application screen information is not limited to the optical character recognition, and the identification information may be obtained in various manners such as magnetic ink character recognition.

Referring to FIG. 3, when texts such as 'new start' 151A, 'resume' 152A, 'setting' 153A, and 'ranking' 154A are displayed on a screen of the card game application 150, identification information such as the 'new start' 151B, 'resume' 152B, 'setting' 153B and 'ranking' 154B are obtained from the application screen information of the application 150.

Meanwhile, the obtained identification information may include information about positions or areas where the texts corresponding to the identification information are displayed on the application screen, and the information may be used to determine positions or areas where the events are generated.

The obtained voice pattern is compared with the identification information through the matching of the identification information to the input information, that is, the matching of the identification information to the voice pattern information, and the identification information having the same pattern as or the most similar pattern to the voice pattern is determined.

Meanwhile, by encoding the identification information for each phoneme or each certain section by a method of encoding the voice pattern information from the voice of the user, the voice pattern information and the identification information may be matched to each other. The identification information and the voice pattern information may be matched through static matching, cosine similarity comparison, or elastic matching.

The event generating apparatus determines whether or not matched identification information matched to the input information exists as a matching result of the obtained identification information to the input information (S120).

As stated above, the identification information having the same pattern as or the most similar pattern to the obtained voice pattern is determined as the matched identification information.

When it is determined that the matched identification information matched to the input information does not exist, the control object selecting apparatus may wait before the input information is obtained again, or may request for the user to make a voice again.

When it is determined that the matched identification information matched to the input information exists, the event generating apparatus obtains the matched identification information (S130).

Referring to FIG. 3, when input information is obtained from the user's voice "new start," the identification information 'new start' 151B among the identification information 'new start' 151B, 'resume' 152B, 'setting' 153B, and 'ranking' 154B may correspond to the matched identification information.

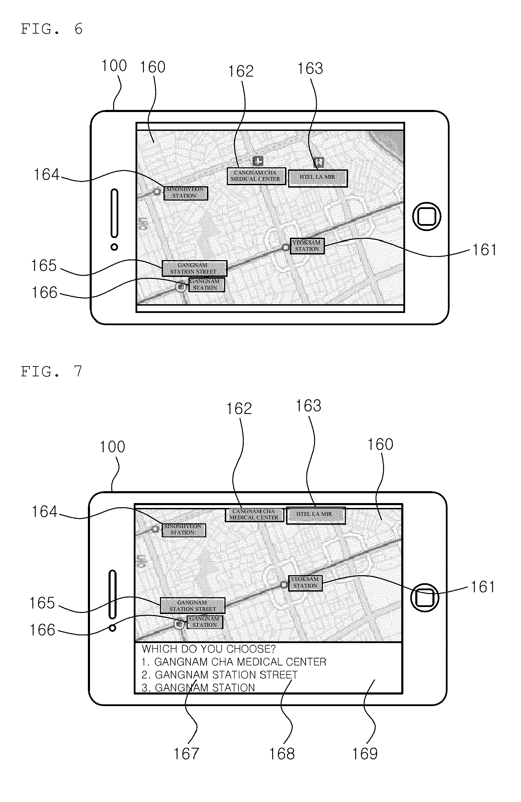

Meanwhile, when the obtained matched identification information is plural in number, a plurality of areas corresponding to the matched identification information may be prioritized, and the prioritizing of the plurality of areas corresponding to the matched identification information will be described below with reference to FIG. 7.

When the matched identification information is obtained, the event generating apparatus generates an event in at least a partial area of areas corresponding to the matched identification information (S140).

The area corresponding to the matched identification information may mean an area where the text corresponding to the matched identification information is positioned on the application screen, for example, a block where the text is positioned, but may mean an area far away with a predetermined range from the area where the text is positioned on the application screen.

The position where the event is generated may be a coordinate within the area corresponding to the matched identification information, or may be a plurality of coordinates constituting the area.

Accordingly, when the identification information 'new start' 151B corresponds to the matched identification information, an event E is generated in an area corresponding to the identification information 'new start' 151B, for example, an area where the text 151A corresponding to the identification information 'new start' 151B is displayed on the card game application 150, as illustrated in FIG. 3.

Here, when the event E is the input event, the same effect as an effect when an input is applied in the area is substantially exhibited. For example, when the event is set to the tap event, the same effect as an effect when a tap is performed in the area is exhibited. In addition, when a control object exists at the position where the input event is generated, the control object may be selected.

The event may be implemented such that the type of the event is previously determined, or may be implemented such that the type of the event is determined based on additional input information. For example, when the additional input information such as 'double tap,' 'long tap,' "swipe,' 'pinch-in,' or 'pinch-out' in addition to the above-described input information is obtained, double tap, long tap, swipe, pinch-in or pinch-out may be performed in the area corresponding to the matched identification information.

FIG. 4 illustrates identification information obtained based on application screen information according to an exemplary embodiment of the present invention.

As illustrated in FIG. 4, the card game application 150 may include a dialog 157 and control objects 155A and 156A. Here, the dialog 157 corresponds to an object that provides only information to the user and cannot be selected by the user, and the control objects 155A and 156A correspond to interfaces that can be selected by the user.

Referring to FIG. 4, identification information such as 'there is' 157C, 'game' 157B, 'you were playing earlier' 157A. 'Do you want' 157E, 'new start' 157D, 'new start' 155B, and 'resume' 156B may be obtained on the application screen information of the card game application 150.

Referring to FIG. 4, when the input information is obtained from the user's voice "new start," areas corresponding to second matched identification information 155B and first matched identification information 157D matched to the obtained input information are positioned within the dialog 157 and the control object 'new start' 155A.

As stated above, when a plurality of matched identification information is obtained, the matched identification information that satisfies a predetermined condition may be determined, an event may be generated in an area corresponding to the determined matched identification information.

For example, as the predetermined condition, the control object may need to be positioned in at least a partial area of areas corresponding to the matched identification information.

Accordingly, when the input information is obtained from the user's voice "new start," since the control object 155A is positioned in at least a partial area of an area corresponding to the second matched identification information 155B of the first and second matched identification information 157D and 155B, the event E may be generated in the area corresponding to the second matched identification information 155B.

When the input event E is generated in the control object 'new start' 155A, the control object 'new start' 155A may be selected in response to the input event E.

As mentioned above, according to the event generating apparatus according to the exemplary embodiment of the present invention, when the plurality of matched identification information is obtained, there is an effect in that the event can be generated in a position intended by the user.

Especially, when general text and hyperlink text are displayed on the web browser, there is an effect in that an event is generated only for the hyperlink text, and thus the user can conveniently control the web browser through the voice recognition.

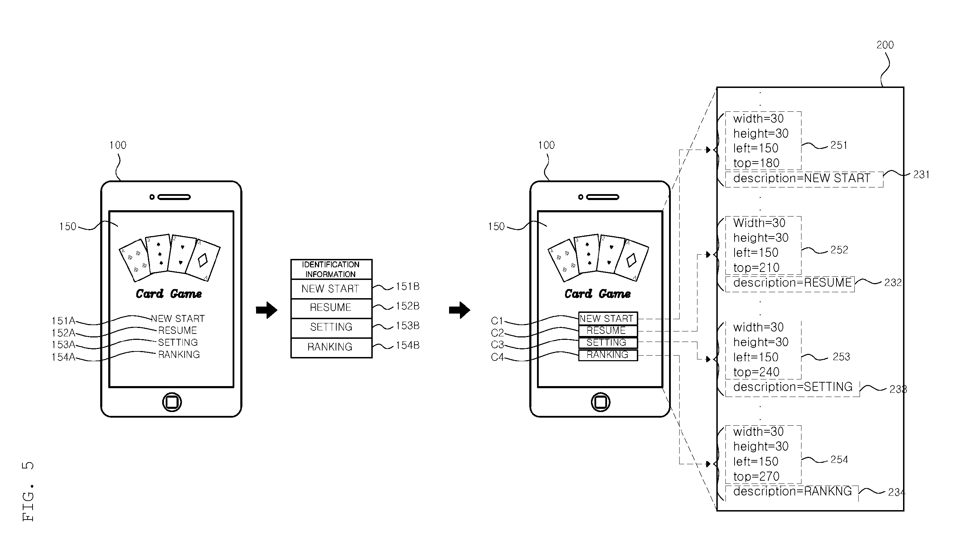

Meanwhile, the event generating apparatus according to the exemplary embodiment of the present invention can exhibit the same effect as that when the event is generated at a position where the control object is positioned by creating the control object on the basis of the obtained identification information and generating the event for the created control object. A configuration in which the control object is generated to generate the event will be described with reference to FIG. 5.

FIG. 5 illustrates a control object generated so as to correspond to the obtained identification information according to an exemplary embodiment of the present invention.

Referring to FIG. 5, when identification information 151B, 152B, 153B and 154B are obtained based on the application screen information, control objects C1, C2, C3 and C4 corresponding to the identification information 151B, 152B, 153B and 154B may be created.

Here, it has been described that the control object is generated to correspond to the identification information, but the description is merely an exemplary embodiment of the present. After the matched identification information matched to the input information is obtained, the control object may be created so as to correspond to the matched identification information. When the control object corresponding to the matched identification information is created after the matched identification information matched to the input information is obtained, it is possible to further reduce a load applied to the apparatus as compared to a case where the control objects corresponding to all identification information are created.

Information 200 about the created control objects may include information 251, 252, 253 and 254 about positions of the control objects and description information 262, 263, 263 and 264 thereof.

The information 251, 252, 253 and 254 about the positions of the control objects mean information about set positions of the control objects C1, C2, C3 and C4 on the screen of the application 150, and the set positions of the control objects C1, C2, C3 and C4 correspond to areas corresponding to identification information 151B, 152B, 153B and 154B, for example, areas where text 151A, 152A, 153A and 154A corresponding to the identification information 151B, 152B, 153B and 154B are displayed on the screen of the application 150.

The information 251, 252, 253 and 254 about the positions of the control objects may be represented as values of a 'width' item, a 'height' item, a 'left' item and a 'top' item, as illustrated in FIG. 5.

The description information 262, 263, 263 and 264 are labels of the control objects C1, C2, C3 and C4, and may include the identification information 151B, 152B, 153B and 154B obtained based on the application screen information.

When the control objects C1, C2, C3 and C4 are created, the event may be generated for the control object corresponding to the matched identification information, that is, for the control object having the description information including the matched identification information.

Here, the event for the control object may be the input event for the area where the control object is positioned or the selection event using the control object as a target.

Meanwhile, edges of the created control objects C1, C2, C3 and C4 may be displayed as illustrated in FIG. 5, or may not be displayed in order to maintain the screen displayed before the control objects C1, C2, C3 and C4 are created.

On the other hand, the event generating apparatus according to the exemplary embodiment of the present invention may temporarily store the created control objects in a buffer and may use the control objects at a predetermined time or under a predetermined condition. A configuration in which the created control objects are temporarily stored in the buffer will be described with reference to FIG. 6.

FIG. 6 illustrates a schematic diagram of the event generating apparatus according to the exemplary embodiment of the invention.

As illustrated in FIG. 6, a map application 160 is run on the event generating apparatus 100, and may be identification information 'Yeoksam station,' 'Gangnam CHA medical center,' 'Hotel La Mir,' 'Sinnonhyeon station,' 'Gangnam station street,' 'Gangnam station' be obtained based on the application screen information of the application 160.

In addition, as illustrated in FIG. 6, control objects 160 to 166 corresponding to the obtained identification information may be created.

As illustrated in FIG. 6, when the map application 160 is run on the event generating apparatus 100, a screen is frequently changed through scrolling, enlarging and reducing. The control objects corresponding to the obtained identification information are created for each of the changed screens, and the created control objects are continuously stored. This may cause an overload of the apparatus 100.

Accordingly, the event generating apparatus according to the exemplary embodiment of the present invention may store the control objects created so as to correspond to the identification information in the buffer and may create the control object so as to correspond to the matched identification information after the matched identification information matched to the input information is obtained. By doing this, the overload of the apparatus can be prevented.

Meanwhile, when the obtained matched identification information is plural in number, the plurality of areas corresponding to the matched identification information or the control objects corresponding to the matched identification information may be prioritized and the events may be generated according to priority. A configuration in which the events are generated according to priority will be described with reference to FIG. 7.

FIG. 7 illustrates a schematic diagram of the event generating apparatus according to the exemplary embodiment of the present invention.

As illustrated in FIG. 7, the map application may be run on the event generating apparatus 100.

Referring to FIG. 7, when the input information is obtained from the user's voice "Gangnam," the identification information matched to the input information may be 'Gangnam CHA medical center,' 'Gangnam station street,' and 'Gangnam station.' At this time, the events may be generated in at least a partial area of areas corresponding to the matched identification information or for the control objects 162, 165 and 166 corresponding to the matched identification information.

As described above, when the plurality of matched identification information is obtained, there is a problem in that when the events are all generated in the areas corresponding to the plurality of matched identification information or when the events are all generated for the control objects corresponding to the plurality of matched identification information, the events are not generated in a position intended by the user.

Accordingly, when the plurality of matched identification information is obtained, the areas corresponding to the plurality of matched identification information or the control objects corresponding to the matched identification information may be prioritized.

Referring to FIG. 7, the priority may be given to the areas corresponding to the matched identification information or the control objects corresponding to the matched identification information, in order of higher positions of control objects on the map.

Here, the event may be generated only in an area corresponding to the identification information 'Gangnam CHA medical center' having the first priority or only for the control object 162 corresponding to the identification information 'Gangnam CHA medical center.' Otherwise, as illustrated in FIG. 7, examples 167, 168 and 169 according to priority may be provided so as to allow the user to select the control object with more precise and the selection may be performed from the examples 167, 168 and 169 through the voice recognition.

As described above, the priority may be given to the areas corresponding to the matched identification information or the positions of the control objects corresponding to the matched identification information. Alternatively, the priority may be given in various manners. For example, the priority may be given based on input history, but is not limited to the aforementioned manners.

Meanwhile, according to the exemplary embodiment of the present invention, the input information may text itself recognized by further comparing the voice pattern information obtained from the voice of the user with a language model DB.

When the input information is text recognized from the voice of the user through the voice recognition, the matching of the input information to the identification information may performed by comparing the recognized text with the identification information itself.

In some examples, there are provided an apparatus and a method for generating an event through voice recognition. The apparatus for generating an event through voice recognition according to the present disclosure may include one or more processing devices, in which the one or more processing devices may be configured to obtain input information on the basis of a voice of a user, to match the input information to at least one identification information obtained based on application screen information, to obtain matched identification information matched to the input information among the identification information, and to generate an event in at least a partial area of areas corresponding to the matched identification information. There may be an advantage in that since an electronic device can be controlled through voice recognition even when using an application that does not store a control command in advance, accessibility of a user to the electronic device can be improved.

Combinations of each block of the accompanying block diagram and each step of the flow chart can be implemented by algorithms or computer program instructions comprised of firmware, software, or hardware. Since these algorithms or computer program instructions can be installed in processor of a universal computer, a special computer or other programmable data processing equipment, the instructions executed through a processor of a computer or other programmable data processing equipment generates means for implementing functions described in each block of the block diagram or each step of the flow chart. Since the algorithms or computer program instructions can be stored in a computer available or computer readable memory capable of orienting a computer or other programmable data processing equipment to implement functions in a specific scheme, the instructions stored in the computer available or computer readable memory can produce items involving an instruction means executing functions described in each block of the block diagram or each step of the flow chart. Since the computer program instructions can be installed in a computer or other programmable data processing equipment, a series of operation steps are carried out in the computer or other programmable data processing equipment to create a process executed by the computer such that instructions implementing the computer or other programmable data processing equipment can provide steps for implementing functions described in functions described in each block of the block diagram or each step of the flow chart.

Further, each block or each step may indicate a part of a module, a segment, or a code including one or more executable instructions for implementing specific logical function(s). Furthermore, it should be noted that in some alternative embodiments, functions described in blocks or steps can be generated out of the order. For example, two blocks or steps illustrated continuously may be implemented simultaneously, or the blocks or steps may be implemented in reverse order according to corresponding functions.

The steps of a method or algorithm described in connection with the embodiments disclosed in the present specification may be embodied directly in hardware, in a software module executed by a processor, or in a combination of the two. The software module may reside in RAM memory, flash memory, ROM memory, EPROM memory, EEPROM memory, register, hard disk, a removable disk, a CD-ROM, or any other form of storage medium known in the art. An exemplary storage medium is coupled to the processor such that the processor can read information from, and write information to, the storage medium. Otherwise, the storage medium may be integrated with the processor. The processor and the storage medium may reside in an application-specific integrated circuit (ASIC). The ASIC may reside in a user terminal. Otherwise, the processor and the storage medium may reside as discrete components in a user terminal.

The present invention has been described in more detail with reference to the exemplary embodiments, but the present invention is not limited to the exemplary embodiments. It will be apparent to those skilled in the art that various modifications can be made without departing from the technical sprit of the invention. Accordingly, the exemplary embodiments disclosed in the present invention are used not to limit but to describe the technical spirit of the present invention, and the technical spirit of the present invention is not limited to the exemplary embodiments. Therefore, the exemplary embodiments described above are considered in all respects to be illustrative and not restrictive. The protection scope of the present invention must be interpreted by the appended claims and it should be interpreted that all technical spirits within a scope equivalent thereto are included in the appended claims of the present invention.

## Claims

1. An apparatus for generating an event through voice recognition, the apparatus comprising:
one or more processing devices,
wherein the one or more processing devices are configured:
to obtain input information on the basis of a voice of a user,
to match the input information to at least one identification information obtained based on application screen information,
to obtain matched identification information matched to the input information among the identification information, and
to generate an event in at least a partial area of areas corresponding to the matched identification information.

2. The apparatus for generating an event according to claim 1, wherein the identification information is obtained through optical character recognition, OCR.

3. The apparatus for generating an event according to any one of claims 1 or 2,
wherein the input information includes voice pattern information obtained by analyzing a feature of the voice of the user, and
the matching of the input information to the identification information includes matching of the identification information to the voice pattern information.

4. The apparatus for generating an event according to any one of claims 1 to 3,
wherein the input information includes text information recognized from the voice of the user through voice recognition, and
the matching of the input information to the identification information includes matching of the identification information to the text information.

5. The apparatus for generating an event according to any one of claims 1 to 4, wherein the one or more processing devices obtain additional input information on the basis of the voice of the user and determine the type of the event on the basis of the additional input information.

6. An apparatus for generating an event through voice recognition, the apparatus comprising:
one or more processing devices,
wherein the one or more processing devices are configured:
to obtain input information on the basis of a voice of a user,
to match the input information to at least one identification information obtained based on application information,
to obtain matched identification information matched to the input information among the identification information,
to create a control object so as to correspond to the matched identification information, and
to generate an event for the control object.

7. A method for generating an event through voice recognition, the method comprising:
obtaining input information on the basis of a voice of a user;
matching the input information to at least one identification information obtained based on application screen information;
obtaining matched identification information matched to the input information among the identification information; and
generating an event in at least a partial area of areas corresponding to the matched identification information.

8. The method for generating an event according to claim 7, wherein the identification information is obtained through optical character recognition, OCR.

9. The method for generating an event according to any one of claims 7 or 8,
wherein the input information includes voice pattern information obtained by analyzing a feature of the voice of the user, and
the matching of the input information to the identification information includes matching of the identification information to the voice pattern information.

10. The method for generating an event according to any one of claims 7 to 9,
wherein the input information includes text information recognized from the voice of the user through voice recognition, and
the matching of the input information to the identification information includes matching of the identification information to the text information.

11. The method for generating an event according to any one of claims 7 to 10, further comprising:
obtaining additional input information on the basis of the voice of the user; and
determining the type of the event on the basis of the additional input information.

12. A method for generating an event through voice recognition, the method comprising:
obtaining input information on the basis of a voice of a user;
matching the input information to at least one identification information obtained based on application screen information;
creating a control object on the basis of the identification information;
obtaining matched identification information matched to the input information among the identification information;
creating a control object so as to correspond to the matched identification information; and
generating an event for the control object.

13. A computer-readable medium that stores command sets, wherein when the command sets are executed by a computing apparatus,
the command sets cause the computing apparatus to obtain input information on the basis of a voice of a user, to match the input information to at least one identification information obtained based on application screen information, to obtain matched identification information matched to the input information among the identification information, and to generate an event in at least a partial area of areas corresponding to the matched identification information.
